# FASCICULE DE BREVET EUROPEEN

(11) **EP 3 787 941 B1**
(45) Date de publication et mention de la délivrance du brevet: **23.04.2025**
(21) Numéro de dépôt: 19728490.4
(22) Date de dépôt: 03.05.2019
(51) Int. Cl.: B60T 7/20, B60T 13/12

(54) **SYSTEME DE FREINAGE AMELIORE ET VEHICULE COMPORTANT UN TEL SYSTEME DE FREINAGE**
VERBESSERTES BREMSSYSTEM UND FAHRZEUG MIT EINEM SOLCHEN BREMSSYSTEM
IMPROVED BRAKING SYSTEM AND VEHICLE COMPRISING SUCH A BRAKING SYSTEM

(30) Priorité: 04.05.2018 FR 1853908
(43) Date de publication de la demande: 10.03.2021
(73) Titulaire: Lohr Industrie, 67980 Hangenbieten (FR)
(72) Inventeur: GLOUCHKOFF, Pierre-Charles, 67210 NIEDERNAI (FR)
(74) Mandataire: Merckling, Norbert
(86) Numéro de dépôt international: PCT/FR2019/051019
(87) Numéro de publication internationale: WO 2019/211569

(56) Documents cités:
- EP-A1- 0 410 891
- EP-A1- 3 103 691
- WO-A1-2016/134770
- DE-A1- 102008 026 686
- FR-A1- 2 722 464
- FR-A1- 2 772 706
- RU-C1- 2 232 685
- US-A- 5 709 435
- US-B1- 9 315 173

## Description

### Domaine technique

La présente invention se rapporte au domaine technique général des systèmes de freinage pour véhicules. Ces systèmes de freinage permettent par l'intermédiaire de circuits hydrauliques, d'actionner des organes de freinage disposés au niveau des roues d'un véhicule. La présente invention concerne plus particulièrement un système de freinage optimisé destiné à des véhicules pouvant circuler seul ou en convoi sous forme d'un attelage de plusieurs véhicules.

Les systèmes de freinage optimisés dans la présente invention concernent également des véhicules autonomes dont le pilotage et/ou certaines fonctionnalités sont assurés par un automate. De tels véhicules autonomes, sont par exemple dépourvus de poste de conduite ou de pilotage. À titre de variante, ces véhicules autonomes peuvent également disposer d'organes adéquats permettant à un conducteur de reprendre en main partiellement ou en totalité les fonctionnalités du véhicule. Ceci peut s'avérer utile dans certains cas pour manœuvrer ledit véhicule, dans des cas d'urgence ou de danger immédiat.

L'invention concerne également l'optimisation des systèmes de freinage des véhicules attelés entre eux et pour lesquels l'un constitue un véhicule tracteur et les autres attelés au véhicule tracteur sont configurés en mode remorque.

Il existe divers systèmes de freinage pour véhicules, mais ces derniers ne sont en général pas conçus et configurés pour répondre techniquement à l'ensemble des applications souhaitées à savoir véhicules autonomes, véhicules attelés ou véhicules pilotés manuellement. En outre, les systèmes de freinage connus sont en général inaptes à répondre à l'ensemble des contraintes de sécurité obligatoires, notamment lorsque le système de freinage présente un dysfonctionnement.

En outre, le développement très spécifique de modules ABS/ESP pour ce type de véhicules, est extrêmement coûteux.

On connaît également par l'intermédiaire du document EP 3 103 691, un système de freinage pour véhicule à deux essieux. Ce document décrit plus particulièrement une remorque comportant des moyens de freinage autonomes vis-à-vis du tracteur. Le système de freinage décrit comprend deux circuits de freinage distincts, l'un étant alimenté par un circuit hydraulique principal tandis que l'autre est alimenté par un accumulateur hydraulique. Ce dernier n'agissant que sur un essieu pour mettre en oeuvre un freinage de sécurité. En outre, un tel système, conçu pour un attelage comprenant un véhicule tractant une remorque, n'est pas adapté à un véhicule motorisé, configurable en différents modes d'utilisation. Le système décrit dans ce document ne peut pas répondre aux exigences liés au fonctionnement d'un véhicule susceptible d'être utilisé en mode remorque et en mode tracteur.

Le document FR 2 772 706 A1 décrit un système de freinage de service basé sur une électrovanne et un accumulateur ainsi qu'un système de freinage de secours manuel. Le système de freinage comprend un calculateur et un capteur de la course de la pédale de freinage, mais n'est relié qu'aux roues avant du véhicule.

Le fonctionnement du système de freinage repose sur un sélecteur permettant d'avoir recours de manière exclusive à une pression de freinage manuelle ou à une pression de freinage automatique.

Le document US 5 709 435 A décrit un système de freinage permettant d'ajuster l'effort de freinage entre un véhicule tracteur et un véhicule tracté. Ces véhicules ont chacun un système de freinage propre et indépendant sur un plan hydraulique, mais non sur un plan fonctionnel. En effet, les instructions de freinage de la remorque sont adaptées au freinage du véhicule tracteur pour équilibrer notamment les intensités de freinage sur les deux véhicules. Ce document ne décrit pas deux systèmes de freinage distincts sur un même véhicule.

Dans le document US9315173, le système de freinage du véhicule remorqué peut comprendre un contrôleur principal et un dispositif d'activation de la pédale de frein. Le contrôleur principal peut être monté dans un véhicule de remorquage et peut être placé sélectivement en mode remorque ou en mode véhicule motorisé. Le contrôleur principal est configuré pour émettre des signaux de commande de freinage correspondant à un premier ensemble d'algorithmes de force de freinage associés au remorquage d'une remorque en mode remorque et est configuré pour émettre des signaux de commande de freinage correspondant à un deuxième ensemble d'algorithmes de force de freinage associés au remorquage d'un véhicule motorisé en mode véhicule motorisé. Ce document ne décrit pas deux systèmes de freinage dans lesquels chacun des véhicules est équipé de la totalité des organes du système de freinage, pour générer des consignes de freinage principales et complémentaires.

L'objet de la présente invention vise par conséquent à pallier les inconvénients cités précédemment et à fournir un nouveau système de freinage optimisé garantissant une sécurité de fonctionnement même en cas de défaillance de l'un ou l'autre des éléments constitutifs dudit système de freinage.

Un autre objet de la présente invention vise à proposer un nouveau système de freinage permettant d'équiper indifféremment un véhicule piloté manuellement, un véhicule autonome, un véhicule d'un convoi configuré en tracteur ou configuré en remorque et notamment un véhicule configurable en différents mode de fonctionnement et/ou d'utilisation.

Un autre objet de la présente invention vise à fournir un système de freinage optimisé lequel permet de fournir une puissance de freinage suffisante et ce même pour les véhicules relativement lourds à savoir dont le poids dépasse 3500 kg. Un autre objet de la présente invention vise à fournir un nouveau système de freinage efficace pour des véhicules dont les systèmes de freinage du type ABS et ESP avec une fonction freinage autonome, s'avèrent insuffisants.

Un autre objet de la présente invention vise à proposer un nouveau véhicule équipé d'un nouveau système de freinage optimisé. Les objets assignés à la

présente invention sont atteints à l'aide d'un système de freinage d'un véhicule routier motorisé, configuré en mode remorque et en mode tracteur, pour actionner des organes de freinage pour actionner des organes de freinage du véhicule associés aux roues dudit véhicule, ledit système comprenant des organes de commande pour piloter son fonctionnement et un circuit hydraulique de freinage manuel, caractérisé en ce qu'il comprend un circuit hydraulique complémentaire équipant le même véhicule et piloté électriquement, les organes de commande comprenant une automate de freinage électrique pour générer des consignes de freinage principales ou complémentaires, lesquelles sont transmises au circuit hydraulique complémentaire.

Selon un exemple de réalisation, le système de freinage équipe un véhicule configurable en mode remorque, dans lequel le circuit hydraulique complémentaire piloté électriquement par l'intermédiaire de l'automate de freinage est activé, ledit automate de freinage étant esclave d'un automate de freinage maître d'un autre véhicule.

Selon un exemple de réalisation, le système de freinage comprend des séparateurs de fluide de freinage pour permettre un fonctionnement avec deux fluides de freinage différents.

Selon un exemple de réalisation, le circuit hydraulique complémentaire comprend au moins un accumulateur pour stocker un fluide hydraulique sous une pression hydraulique adaptée à la mise en œuvre des opérations de freinage.

Selon un exemple de réalisation, l'automate de freinage comprend des organes d'analyse et/ou de comparaison pour détecter une défaillance ou un dysfonctionnement du circuit hydraulique de freinage manuel et générer des consignes de freinage correspondant à un freinage d'urgence dudit véhicule à l'aide du circuit hydraulique de freinage complémentaire.

Selon un exemple de réalisation, le système de freinage comprend un ensemble de capteurs pour mesurer des valeurs de paramètres physiques de fonctionnement et d'utilisation dudit véhicule, lesdits capteurs étant reliés à l'automate de freinage pour transmettre à ce dernier les valeurs mesurées et générer automatiquement des consignes de freinage pour le circuit hydraulique complémentaire et mettre en œuvre ainsi un de freinage automatique.

Selon un exemple de réalisation, le circuit hydraulique de freinage manuel comprend un organe de freinage manuel, du genre pédale d'actionnement de freinage, équipé d'un capteur de position, lequel fournit une information utilisée pour effectuer une comparaison avec la puissance de freinage transmise aux organes de freinage et vérifier ainsi l'intégrité dudit système de freinage.

Selon un exemple de réalisation, le système de freinage comprend un organe de sélection pour sélectionner un mode de fonctionnement autonome dans lequel le freinage automatique est activé ou un mode de fonctionnement manuel dans lequel le circuit hydraulique de freinage manuel est activé.

Selon un exemple de réalisation, le circuit hydraulique de freinage manuel et le circuit hydraulique complémentaire sont connectés aux organes de freinage par l'intermédiaire d'une porte hydraulique « OU » permettant de donner la priorité au circuit hydraulique présentant la pression hydraulique de freinage la plus élevée.

Selon un mode de réalisation, le système de freinage conforme à l'invention comprend un module de répartition de la pression hydraulique de freinage, du genre ABS et/ou ESP.

Les objets assignés à la présente invention sont atteints également à l'aide d'un véhicule comportant un système de freinage tel que présenté ci-dessus et pouvant être configuré en véhicule individuel ou en véhicule autonome.

Les objets assignés à la présente invention sont atteints également à l'aide véhicule autonome comportant un système de freinage tel que présenté ci-dessus.

Les objets assignés à l'invention sont également atteints à l'aide d'un véhicule comportant un système de freinage tel que décrit ci-dessus et pouvant être configuré en mode remorque ou en mode tracteur, dans lequel le circuit hydraulique complémentaire piloté électriquement par l'intermédiaire de l'automate de freinage est activé, ledit automate de freinage étant esclave d'un automate de freinage maître d'un autre véhicule.

Les objets assignés à la présente invention sont atteints également à l'aide d'un convoi de véhicules reliés ensemble grâce à un attelage mécanique ou immatériel, ledit convoi comprenant un véhicule tracteur comportant un système de freinage tel que présenté ci-dessus et au moins un véhicule configuré en mode remorque tel que présenté ci-dessus, l'automate de freinage du véhicule tracteur étant connecté à l'automate de freinage du véhicule configuré en mode remorque l'intermédiaire d'une liaison de communication filaire ou non filaire, par laquelle transitent les consignes de freinage pour ledit véhicule configuré en mode remorque.

Le système de freinage conforme à l'invention présente l'énorme avantage d'intégrer un mode de freinage piloté à moindre frais et ce même si le véhicule n'est pas équipé d'un module ABS/ESP.

Un autre avantage du système de freinage conforme à l'invention réside dans la possibilité de procéder à un réglage de la puissance maximale de freinage. En effet, un système de freinage classique comporte en général un maître-cylindre dimensionné pour délivrer une puissance de freinage maximale déterminée et adaptée au poids du véhicule. L'invention permet d'adapter cette puissance maximale de freinage à diverses contraintes liées notamment au mode d'utilisation du véhicule ou à des performances spécifiques de freinage. Une telle possibilité d'adaptation est très intéressante, notamment lorsque le véhicule n'est pas pourvu d'un répartiteur de freinage du genre ABS. A titre d'exemple, il est possible, avec le système de freinage conforme à l'invention, de réduire substantiellement le risque de blocage des roues sur route sèche tout en ne dégradant pas les performances de freinage. Le système de freinage conforme à l'invention permet ainsi d'adapter la puissance maximale de freinage par exemple à la masse embarquée ou aux spécificités de freinage liées à l'utilisation du véhicule en au mode remorque.

Un autre avantage du système de freinage conforme à l'invention réside dans le fait qu'il peut équiper un véhicule existant et qu'il n'est pas nécessaire de remplacer les étriers de frein d'origine dudit véhicule.

Un autre avantage du système de freinage conforme à l'invention réside dans le fait que son circuit de freinage complémentaire permet, en mode piloté, de fournir davantage de puissance de freinage et ce de façon automatique, lorsque le véhicule est utilisé mode de freinage manuel. Le système de freinage conforme à l'invention peut ainsi pallier d'éventuelles défaillances ou d'éventuels manques de vigilance du conducteur.

Un autre avantage du système de freinage conforme à l'invention, réside dans son intégration facile et fiable dans un véhicule pouvant être configuré ou reconfiguré en fonction de son utilisation en mode véhicule individuel, en mode véhicule autonome ou en mode remorque.

Le circuit hydraulique complémentaire intégré au même véhicule que le circuit hydraulique de freinage manuel, peut réaliser en cas de besoin, un freinage standard du véhicule en utilisation courante et n'est pas réservé uniquement à freinage de sécurité.

Le système de freinage conforme à l'invention est également avantageux dans la mesure où il peut équiper des véhicules de type différent. Cela constitue un avantage économique intéressant pour le fabriquant de tels véhicules.

### Brève description des figures

D'autres caractéristiques et avantages de l'invention apparaîtront à la lecture de la description détaillée qui va suivre, donnés à titre d'exemple illustratifs et non limitatifs, description faite en référence aux dessins annexés, dans lesquels :
- la figure 1 est une représentation fonctionnelle d'un mode de réalisation d'un système de freinage conforme à l'invention,
- la figure 2 est un schéma hydraulique détaillé d'un exemple de réalisation du système de freinage de la figure 1,
- la figure 3a est un schéma hydraulique détaillé d'un autre exemple de réalisation du système de freinage de la figure 1,
- la figure 3b est un schéma hydraulique détaillé d'un autre exemple de réalisation du système de freinage de la figure 1,
- la figure 4 est une représentation fonctionnelle d'un autre mode de réalisation d'un système de freinage conforme à l'invention, et
- la figure 5 est un schéma hydraulique détaillé d'un exemple de réalisation du système de freinage de la figure 4.

### Exposé détaillé de l'invention

Dans la suite, les éléments représentés sur plusieurs figures, lesquels sont structurellement et fonctionnellement identiques comportent les mêmes références numériques ou alphanumériques.

Les systèmes de freinage sont illustrés dans la suite à l'aide de diverses figures se rapportant à divers exemples de réalisation. Dans ces exemples de réalisation, les circuits hydrauliques de freinage sont constitués de deux demi-circuits identiques, de manière à pouvoir mettre en œuvre un freinage du véhicule mêmes en cas de dysfonctionnement ou de fuite hydraulique sur l'un des demi-circuits.

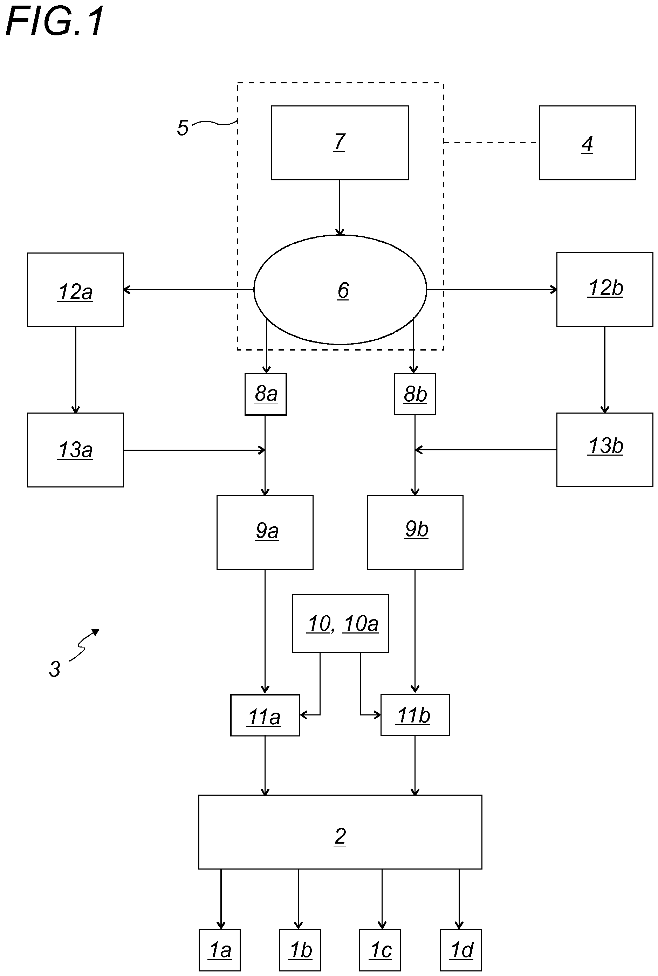

La figure 1 est une représentation fonctionnelle d'un mode de réalisation d'un système de freinage d'un véhicule conforme à l'invention. Dans ce mode de réalisation, le système de freinage permet d'actionner des organes de freinage 1a à 1b, 1c, 1d, en l'occurrence des étriers de frein, associé chacun à un disque de freinage d'une roue du véhicule.

Les consignes de freinage sont transmises avantageusement aux organes de freinage 1a, 1b, 1c, 1d par l'intermédiaire d'un module de répartition de l'intensité du freinage 2 du genre ABS et/ou ESP. Les éléments permettant de réaliser cette répartition de la pression hydraulique de freinage sont destinés à éviter le blocage des roues et/ou d'effectuer un contrôle/correction de trajectoire sont optionnels.

Le système de freinage comprend avantageusement un circuit hydraulique complémentaire 3 de freinage, piloté électriquement par l'intermédiaire d'une automate de freinage 4.

L'automate de freinage 4 comprend des composants électriques et/ou électroniques permettant de mettre en œuvre des fonctions d'analyse et de comparaison de valeurs de paramètres physiques mesurés par l'intermédiaire de capteurs disposés sur le véhicule.

L'automate de freinage 4 permet également de recevoir par l'intermédiaire d'une liaison filaire ou non filaire des informations et/ou des consignes de freinage provenant d'une automate de freinage 4 d'un autre véhicule lorsque les véhicules sont attelés pour forme un convoi.

Le circuit hydraulique complémentaire 3 comprend un sous-ensemble d'alimentation hydraulique 5. Ce dernier comprend une pompe hydraulique 6 reliée à un réservoir 7 de fluide hydraulique, en l'occurrence une huile minérale. L'automate de freinage 4 pilote avantageusement le fonctionnement de la pompe hydraulique 6.

Le circuit hydraulique complémentaire 3 comprend également deux valves hydrauliques proportionnelles inverses 8a et 8b pilotées par l'automate de freinage 4. Une telle valve proportionnelle inverse 8a, 8b est passante à 100 % lorsqu'elle n'est pas alimentée électriquement. Les valves hydrauliques proportionnelles inverses 8a et 8b permettent de commander une intensité de freinage sur les organes de freinage 1a et 1b, respectivement 1c et 1d de deux demi-circuits de freinage du véhicule.

Les valves hydrauliques proportionnelles inverses 8a et 8b permettent d'alimenter en fluide hydraulique respectivement des séparateurs de fluide 9a et 9b. Ces derniers sont avantageusement constitués d'un maître-cylindre permettant d'une part de transmettre une intensité de freinage et d'autre part d'utiliser un fluide de freinage différent pour actionner les organes de freinage 1a, 1b, 1c, 1d.

Le système de freinage conforme à l'invention comprend également un circuit hydraulique de freinage manuel 10. Ce circuit hydraulique de freinage manuel 10 comprend par exemple un organe d'actionnement 10a manuel relié à un maître-cylindre et connecté à des sélecteurs 11a et 11b. Les sélecteurs 11a et 11b sont constitués par exemple de valves hydrauliques pilotées électriquement et permettent de commander une intensité de freinage pour les organes de freinage 1a, 1b, 1c et 1d soit par l'intermédiaire du système hydraulique de freinage principal 10 soit par l'intermédiaire du circuit hydraulique de freinage complémentaire 3. Ces sélecteurs 11a et 11b permettent d'alimenter en fluide hydraulique directement le module de répartition de freinage 2. Il est ainsi possible de sélectionner soit un mode de freinage manuel à l'aide du circuit hydraulique de freinage manuel 10, soit un mode de freinage automatique, appelé également freinage piloté.

Lorsque les sélecteurs 11a et 11b sont basculés sur la position correspondant au mode « freinage manuel », c'est le conducteur seul qui détermine l'intensité de freinage par l'intermédiaire de l'organe d'actionnement 10a.

Lorsque les sélecteurs 11a et 11b sont basculés sur la position correspondant au mode « freinage piloté », le circuit hydraulique complémentaire 3, transmet grâce aux séparateurs 9a et 9b, une pression hydraulique au module de répartition 2.

A cet effet, le circuit hydraulique complémentaire 3 comprend des accumulateurs d'énergie hydraulique 12a et 12b lesquels sont susceptibles d'agir sur les séparateurs de fluide 9a et 9b.

En fonctionnement en mode piloté, la pompe hydraulique 6 alimente les accumulateurs d'énergie hydraulique 12a et 12b, lesquels restituent suivant des consignes, une pression de fluide dans le système de freinage, mais également en cas de défaillance par exemple de la pompe hydraulique 6.

Ainsi, en cas de défaillance par exemple de la pompe hydraulique 6 ou des valves proportionnelles inverses 8a, 8b, des limiteurs de pression 13a et 13b, lesquels sont connectés directement sur les séparateurs 9a et 9b respectifs, permettent d'obtenir un freinage progressif du véhicule jusqu'à son arrêt complet.

En mode sécurité, la libération de l'énergie hydraulique chargée dans les accumulateurs d'énergie hydraulique 12a et 12b est libérée par l'intermédiaire de valves hydrauliques pilotées électriquement par l'automate de freinage 4 et disposées dans une position non passante pour agir sur les séparateurs 9a et 9b via les limiteurs de pression 13a et 13b respectifs.

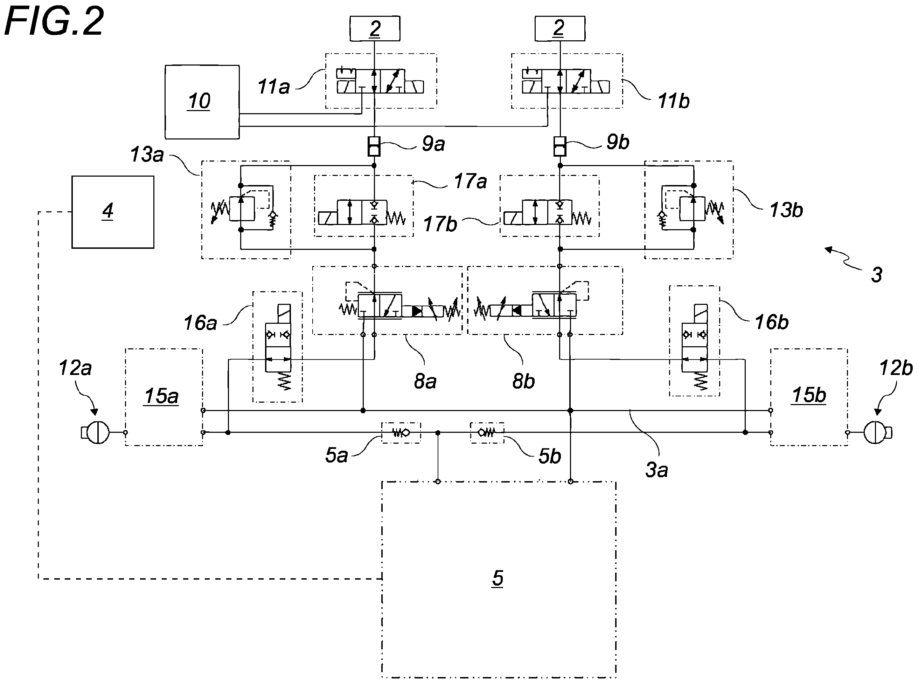

La figure 2 est un schéma hydraulique détaillé d'un exemple de réalisation du système de freinage de la figure 1.

Dans cet exemple de réalisation détaillé, le sous-ensemble d'alimentation 5 charge les accumulateurs hydrauliques 12a et 12b via des clapets anti-retours 5a et 5b et des modules de connexion hydraulique 15a et 15b. Les modules de connexion hydraulique 15a et 15b intègrent avantageusement un système de contrôle de la réserve d'énergie des accumulateurs hydrauliques 12a, 12b. Une branche de circuit retour 3a permet de réaliser une communication fluidique en direction du réservoir 7 du sous ensemble d'alimentation hydraulique 5.

Les accumulateurs hydrauliques 12a et 12b sont reliés aux valves proportionnelles inverses 8a et 8b respectives par l'intermédiaire de valves d'étanchéité respectives 16a et 16b. Ces valves d'étanchéité 16a et 16b permettent de limiter les fuites dans le système hydraulique liées à des éventuels défauts des valves proportionnelles inverse 8a, 8b et par conséquent de diminuer le nombre de mises en marche de la pompe hydraulique 6.

Les valves proportionnelles inverse 8a et 8b sont connectées au séparateur 9a et 9b par l'intermédiaire d'une branche de circuit constituée d'un montage en parallèle d'une valve d'étanchéité complémentaire 17a, 17b et un limiteur de pression 13a, 13b. En mode dit « de sécurité », correspondant à un freinage d'urgence, les valves d'étanchéité complémentaires 17a, 17b ne sont plus alimentées électriquement et se trouvent dans une position non passante comme illustrée à la figure 2. Le fluide hydraulique est alors forcé de passer dans les limiteurs de pression 13a, 13b.

Dans un mode dit « piloté », correspondant à un freinage piloté par l'automate de freinage 4, les valves d'étanchéité complémentaires 17a, 17b ne sont alimentés électriquement et se trouvent dans une position passante.

Les séparateurs 9a et 9b sont connectés sur les sélecteurs 11a et 11b respectifs lesquels permettent un passage du mode freinage manuel à un mode « freinage piloté » ou inversement. Dans l'exemple de réalisation représenté, les sélecteurs 11a et 11b sont des valves disposées dans une position passante correspondant au mode piloté.

A titre d'exemple d'application, lorsque le circuit de freinage complémentaire 3 équipe deux véhicules attelés l'un à l'autre pour constituer un convoi, l'automate de freinage 4 du premier véhicule appelé véhicule tracteur, transmets une information à l'automate de freinage 4 du second véhicule en mode remorque de manière à basculer les sélecteurs 11a et 11b dans une position correspondant à l'activation du freinage piloté. Le circuit hydraulique de freinage manuel 10 du véhicule en mode remorque, est alors désactivé.

En fonctionnement selon le mode piloté, la pompe hydraulique 6 charge les accumulateurs hydrauliques 12a et 12b lesquels fournissent les pressions hydrauliques nécessaires au freinage. Le volume de ces accumulateurs hydrauliques 12a et 12b est élevé de manière à bénéficier d'une réserve d'énergie hydraulique en cas de défaillance de la pompe hydraulique 6. Les accumulateurs 12a et 12b ne sont utilisés que pour mettre en œuvre le freinage en mode piloté et le freinage en mode sécurité.

En fonctionnement selon le mode piloté, les valves proportionnelles inverses 8a et 8b modulent la pression de freinage dans le circuit hydraulique complémentaire 3 selon une consigne fournie par l'automate 4 équipant le véhicule. À titre d'exemple, des capteurs de vitesse des roues, des capteurs de pression et des accéléromètres transmettent les informations nécessaires à l'automate de freinage 4 pour permettre un pilotage du freinage par ledit automate de freinage 4.

En cas de défaillance, par exemple de l'automate du véhicule, les valves d'étanchéité 16a et 16b ainsi que les valves proportionnelles inverses 8a et 8b deviennent passantes tandis que les valves d'étanchéité complémentaires 17a et 17b sont disposées dans un état non passant. Le fluide hydraulique ne peut alors transmettre une force au séparateur 9a et 9b que via les limiteurs de pression respectifs 13a et 13b. Les limiteurs de pression 13a et 13b sont par exemple configurés pour limiter la pression à 30 bars assurant ainsi un freinage de secours modéré jusqu'à un arrêt complet du véhicule.

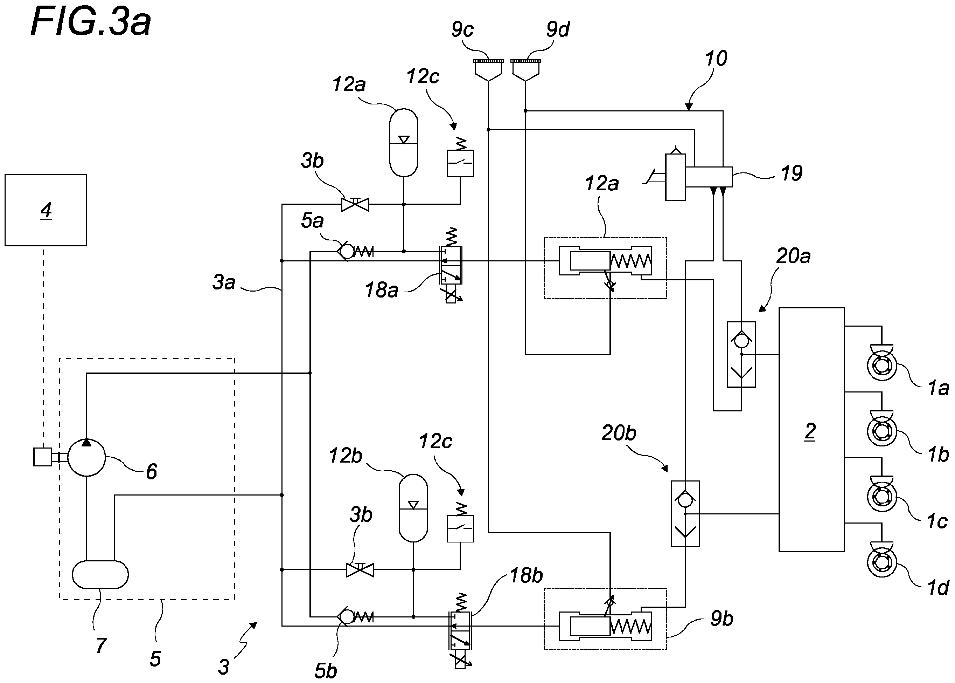

La figure 3a est un schéma hydraulique détaillé d'un autre exemple de réalisation du système de freinage de la figure 1. Dans cet exemple de réalisation, les valves proportionnelles inverses 8a et 8b des figures 1 et 2, sont remplacées respectivement par des valves proportionnelles 18a et 18b. En outre, dans cet exemple de réalisation le circuit hydraulique de freinage manuel 10 comporte par exemple un organe de freinage manuel associé à un maître-cylindre 19.

Le circuit hydraulique complémentaire 3 et le circuit de freinage manuel 10 sont connectés aux organes de freinage 1a, 1b, 1c et 1d par l'intermédiaire d'une valve hydraulique « OU » . Cette valve hydraulique « OU » permet de donner la priorité à celui des circuits hydrauliques complémentaire 3 ou manuel 10, fournissant la pression de freinage la plus élevée.

Dans l'exemple de réalisation de la figure 3a, les valves hydrauliques proportionnelles 18a et 18b permettent d'actionner les séparateurs respectifs 9a et 9b par l'intermédiaire d'une décharge des accumulateurs d'énergie hydraulique 12a et 12b. La pression du fluide contenu dans ces accumulateurs hydraulique 12a et 12b est mesurée par des capteurs de pression 12c. Les accumulateurs hydrauliques 12a et 12b sont chargés par le fluide hydraulique grâce à la pompe hydraulique 6 dont l'activation et la vitesse de rotation sont avantageusement pilotées par l'automate de freinage 4 en fonction de la pression mesurée par les capteurs 12c. Lorsque la pression dans les accumulateurs hydrauliques 12a, 12b diminue pour dépasser un seuil bas prédéterminé, l'automate de freinage 4 commande l'actionnement de la pompe hydraulique 6.

Des robinets 3b sont disposés dans des branches de circuit hydraulique reliant les accumulateurs 12a et 12b à la branche de circuit retour 3a. Ces robinets ne sont utilisés que pour des opérations de maintenance et sont dans une position d'obturation lors du fonctionnement du système de freinage.

Les séparateurs 9a et 9b sont reliés avantageusement à des réservoirs respectifs 9c et 9d, contenant le second fluide hydraulique, lequel agit directement sur les organes de freinage 1a, 1b, 1c, 1d.

Le circuit de freinage complémentaire 3, illustré à la figure 3a permet ainsi de mettre en œuvre un freinage piloté, appelé mode piloté, par exemple pour un véhicule individuel classique, un véhicule autonome ou un véhicule attelé configuré en mode remorque.

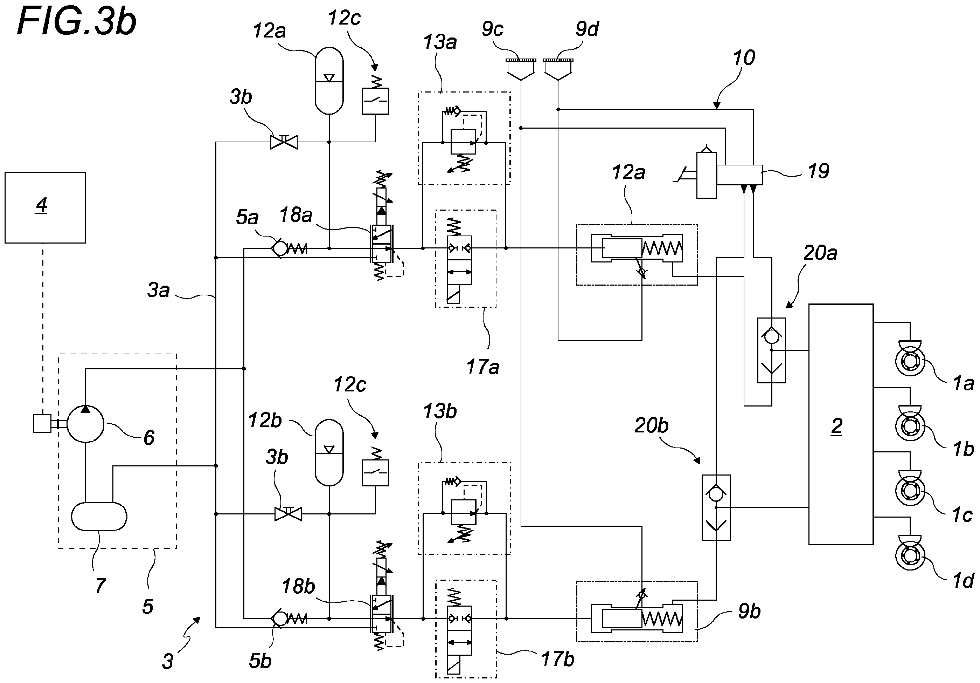

La figure 3b est un schéma hydraulique détaillé d'un exemple additionnel de réalisation du système de freinage de la figure 1. Dans cet exemple illustré à la figure 3b, le circuit hydraulique complémentaire 3 diffère de celui illustré à la figure 3a, en ce qu'il comporte entre les valves proportionnelles 18a, 18b et les séparateurs 9a, 9b respectivement une branche de circuit hydraulique constituée d'un montage en parallèle d'une valve d'étanchéité complémentaire 17a, 17b et d'un limiteur de pression 13a, 13b.

Le circuit de freinage complémentaire 3, illustré à la figure 3b permet ainsi de mettre en œuvre un freinage piloté, appelé mode piloté et un freinage d'urgence, appelé mode sécurité, par exemple pour un véhicule un individuel classique, un véhicule autonome ou un véhicule attelé configuré en mode remorque.

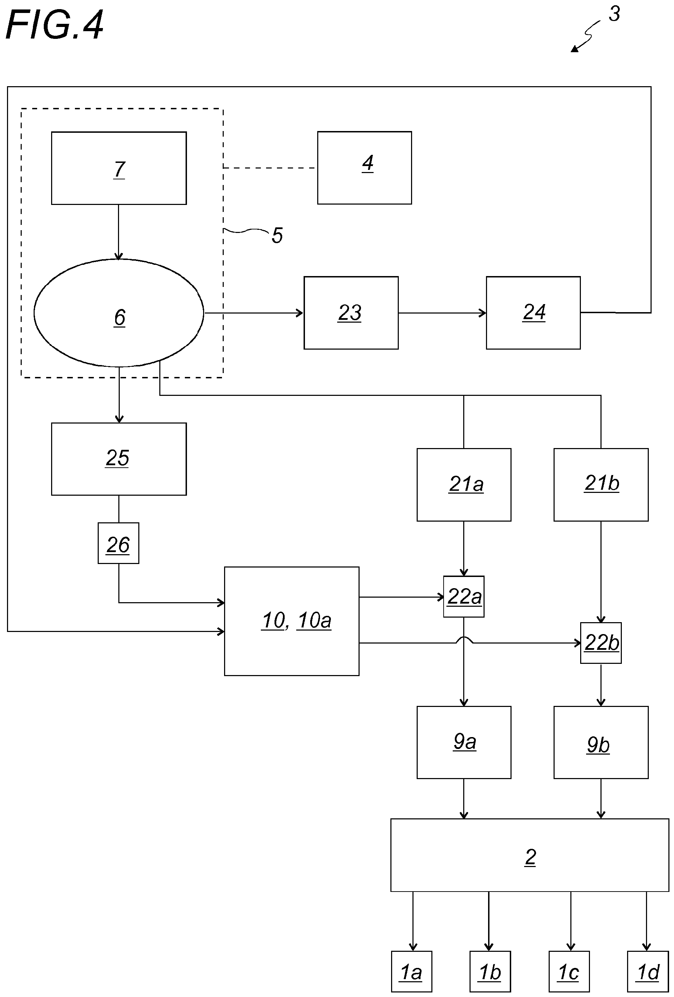

La figure 4 est une représentation fonctionnelle d'un autre mode de réalisation du système de freinage conforme à l'invention. Dans cet autre mode de réalisation, la pression hydraulique est stockée dans les accumulateurs hydrauliques 21a et 21b destinés au freinage en mode manuel par l'intermédiaire du circuit hydraulique de freinage manuel 10 associé à une pédale d'actionnement ou un organe d'actionnement 10a. Les séparateurs 9a et 9b sont alimentés par conséquent par les accumulateurs hydrauliques 21a et 21b respectifs et ce par l'intermédiaire de valves proportionnelles 22a et 22b respectives. Ces dernières sont actionnées par la pédale ou l'organe d'actionnement 10a.

Dans un mode de freinage piloté électriquement par l'intermédiaire de l'automate de freinage 4, un second accumulateur hydraulique 23, chargé par l'intermédiaire de la pompe hydraulique 6 délivre une pression hydraulique à l'organe d'actionnement 10a via une valve proportionnelle 24. Lorsque l'organe d'actionnement 10a est ainsi actionné, c'est cette dernière qui actionne elle-même les valves proportionnelles 22a et 22b pour transmettre une force aux séparateurs 9a et 9b.

L'organe d'actionnement 10a est avantageusement équipée d'un capteur de position 10b dont la position détermine la puissance de freinage souhaitée et ce grâce à une amplitude d'activation correspondante des valves hydrauliques proportionnelles 22a et 22b.

Le circuit hydraulique complémentaire 3 comprend par ailleurs un accumulateur hydraulique de sécurité 25 chargé par l'intermédiaire de la pompe hydraulique 6 et libérant une pression hydraulique pour actionner l'organe d'actionnement 10a via un limiteur de pression 26. La position de l'organe d'actionnement 10a, lue par le capteur de position 10b, permet là encore de piloter les valves proportionnelles 22a et 22b et de commander ainsi un freinage d'urgence grâce à la pression appliquée au séparateur 9a et 9b. Les valves proportionnelles 22a et 22b sont alors dans un état passant, dont l'ouverture n'est pas maximale mais suffisante pour garantir un freinage dégradé.

Avantageusement les séparateurs 9a et 9b sont reliés à des réservoirs respectifs 9c et 9d contenant un fluide hydraulique compatible avec les organes de freinage 1a, 1b, 1c et 1d, en l'occurrence des étriers coopérant avec des disques de freinage.

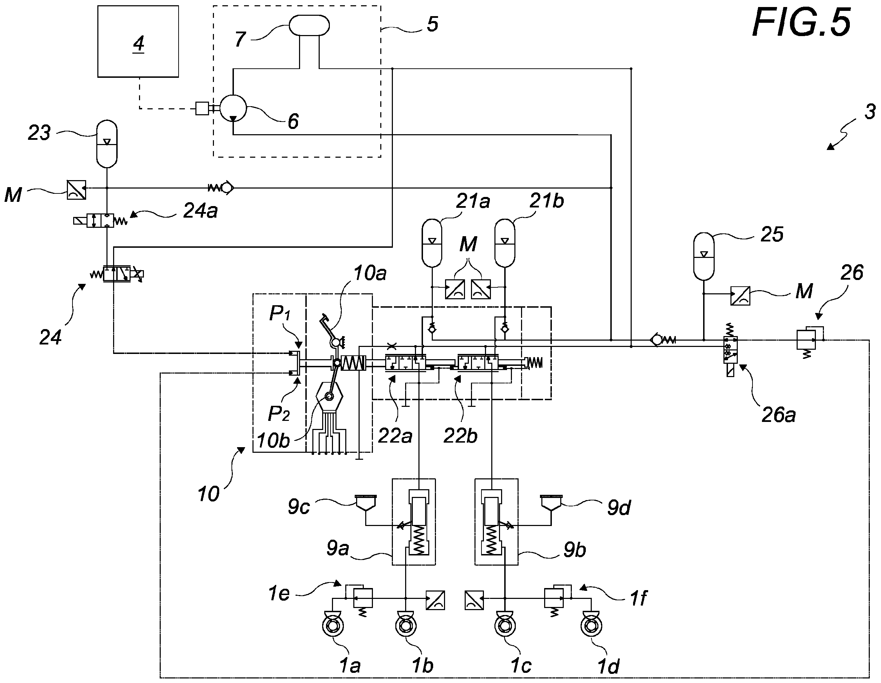

La figure 5 est un schéma hydraulique détaillé d'un exemple de réalisation du système de freinage de la figure 4.

Dans cet exemple de réalisation, l'organe d'actionnement 10a est associé au capteur de position 10b. Le capteur de position 10b, lequel fournit une information de position de l'organe d'actionnement 10a. Cette information est utilisée pour effectuer grâce à l'automate de freinage 4, une comparaison entre la puissance de freinage transmise aux organes de freinage 1a, 1b, 1c, 1d et la puissance de freinage théorique donnée par la position de dudit organe d'actionnement 10a. Une telle vérification permet par exemple de détecter une incohérence entre la pression de freinage lue par des capteurs au niveau de pression des organes de freinage 1a, 1b, 1c, 1d et la position de la pédale d'actionnement 10a. La vérification concerne le freinage en mode manuel et le freinage en mode piloté. Cela permet de vérifier ainsi l'intégrité dudit système de freinage.

Les valves proportionnelles 22a et 22b du type valves à tiroirs, sont reliées mécaniquement entre-elles et directement actionnées par la pédale d'actionnement 10a.

Les accumulateurs hydrauliques 21a et 21b et 25 sont chargés avec le fluide hydraulique pour atteindre une pression prédéterminée. Cette pression est avantageusement consultable par l'intermédiaire de tout dispositif de mesure et de lecture de pression M. Il est ainsi possible de contrôler à tout moment la pression hydraulique régnant à l'intérieur de ces accumulateurs.

Lors du freinage, les valves proportionnelles 22a et 22b distribuent, grâce aux accumulateurs 21a et 21b, la puissance hydraulique aux séparateurs 9a et 9b respectifs.

En mode freinage manuel, c'est l'organe d'actionnement 10a qui détermine la position des valves proportionnelles 22a et 22b et ce avec une action directe d'un utilisateur sur ladite pédale d'actionnement 10a.

En mode freinage piloté, c'est la valve proportionnelle 24 qui libère la puissance hydraulique de l'accumulateur hydraulique 23 sur un port P1 de l'organe d'actionnement 10a. La valve proportionnelle 24 est, dans cet exemple de réalisation, pilotée électriquement et ce par des consignes issues de l'automate de freinage 4. L'accumulateur hydraulique 23 est avantageusement relié à la valve proportionnelle 24 par l'intermédiaire d'une valve d'étanchéité 24a évitant ainsi toute fuite hydraulique lorsque le freinage en mode piloté n'est pas actif.

En cas de panne de la pompe hydraulique 6 ou d'un défaut électrique ou électronique dans le système de freinage, une valve simple 26a permet de libérer la puissance hydraulique d'un accumulateur hydraulique 25 via un limiteur de pression 26 vers un deuxième port P2 de la pédale d'actionnement 10a. Cette dernière actionne alors les valves proportionnelles 22a et 22b lesquelles à leur tour libèrent une puissance hydraulique des accumulateurs hydrauliques 21a et 21b pour agir sur les séparateurs hydrauliques 9a et 9b. La valve simple 26a permet avantageusement de générer un freinage avant qu'il n'y a plus de réserve d'énergie dans les accumulateurs hydrauliques 21a et 21b ou en cas de défaut, par exemple une fuite, dans circuit hydraulique ou en cas d'un défaut électrique/électronique.

Avantageusement, les accumulateurs hydrauliques 21a et 21b sont suffisamment dimensionnés pour permettre par exemple neuf freinages consécutifs en cas de panne de la pompe hydraulique 6. A titre d'exemples, les accumulateurs hydrauliques 21a et 21b ont un volume de 0,5 litres et les accumulateurs hydrauliques 23 et 25 ont un volume de 0,16 litres et ce pour une pression maximale de 130 bars.

Les séparateurs hydrauliques 9a et 9b, connus en tant que tels sont dimensionnés pour compenser le rattrapage de jeu mécanique apparaissant dans les étriers de freins et pour compenser l'usure des plaquettes de freinage.

L'automate de freinage 4 permet également de contrôler automatiquement la pression régnant à l'intérieur des accumulateurs hydrauliques 21a, 21b, 23 et 25 de manière à déceler toute défaillance.

En amont des organes de freinage 1a et 1d associés aux roues arrière du véhicule, il peut être prévu de disposer des limiteurs de pression 1e et 1f pour un véhicule dépourvu de module de répartition 2.

Le circuit hydraulique complémentaire 3, illustré à la figure 5 permet ainsi de mettre en œuvre un freinage piloté, appelé mode piloté et un freinage d'urgence, appelé mode sécurité, par exemple pour un véhicule un individuel classique, un véhicule autonome ou un véhicule attelé configuré en mode remorque.

À titre d'exemple de réalisation additionnelle, il est possible d'intégrer en série entre les séparateurs 9a et 9b et les organes freinage 1a, 1b, 1c et 1d, un module de répartition de l'intensité du freinage 2, tel que cela est schématisé à la figure 4.

De manière évidente, l'invention ne se limite pas au mode de réalisation préférentiel décrit précédemment et représenté sur les différentes figures, l'homme du métier pouvant y apporter de nombreuses modifications et imaginer d'autres variantes. Ainsi, une caractéristique technique décrite peut être remplacée par une caractéristique technique équivalente sans sortir ni de la portée, ni du cadre de l'invention définis par les revendications.

## Revendications

1. Système de freinage d'un véhicule routier motorisé, configuré en mode remorque et en mode tracteur, pour actionner des organes de freinage pour actionner des organes de freinage (1a, 1b, 1c, 1d) du véhicule associés aux roues dudit véhicule, ledit système comprenant des organes de commande pour piloter son fonctionnement et un circuit hydraulique de freinage manuel (10), **caractérisé en ce qu'**il comprend un circuit hydraulique complémentaire (3) équipant le même véhicule et piloté électriquement, les organes de commande comprenant une automate de freinage (4) électrique pour générer des consignes de freinage principales ou complémentaires, lesquelles sont transmises au circuit hydraulique complémentaire (3).

2. Système de freinage selon la revendication 1, **caractérisé en ce qu'**il équipe un véhicule tracté dont la configuration en mode remorque est activée, dans lequel le circuit hydraulique complémentaire (3) piloté électriquement par l'intermédiaire de l'automate de freinage (4) est activé, ledit automate de freinage (4) étant esclave d'un automate de freinage (4) maître d'un autre véhicule.

3. Système de freinage selon la revendication 1 ou 2, **caractérisé en ce que** le système de freinage comprend un ensemble de capteurs pour mesurer des valeurs de paramètres physiques de fonctionnement et d'utilisation dudit véhicule, lesdits capteurs étant reliés à l'automate de freinage (4) pour transmettre à ce dernier les valeurs mesurées et générer automatiquement des consignes de freinage pour le circuit hydraulique complémentaire (3) et mettre en œuvre ainsi un de freinage automatique.

4. Système de freinage selon l'une quelconque des revendications 1 à 3, **caractérisé en ce que** le circuit hydraulique complémentaire (3) comprend au moins un accumulateur (21a, 21b, 23, 25, 12a, 12b) pour stocker un fluide hydraulique sous une pression hydraulique adaptée à la mise en œuvre des opérations de freinage.

5. Système de freinage selon l'une quelconque des revendications 1 à 9, **caractérisé en ce que** l'automate de freinage (4) comprend des organes d'analyse et/ou de comparaison pour détecter une défaillance ou un dysfonctionnement du circuit hydraulique de freinage manuel et générer des consignes de freinage correspondant à un freinage d'urgence dudit véhicule à l'aide du circuit hydraulique de freinage complémentaire (3).

6. Système de freinage selon l'une quelconque des revendications 1 à 5, **caractérisé en ce que** le circuit hydraulique de freinage manuel comprend un organe de freinage manuel, du genre pédale d'actionnement (10a) de freinage, équipé d'un capteur de position (10b), lequel fournit une information utilisée pour effectuer une comparaison avec la puissance de freinage transmise aux organes de freinage (la, lb, 1 c, 1d) et vérifier ainsi l'intégrité dudit système de freinage.

7. Système de freinage selon les revendications 3 et 6, **caractérisé en ce qu'**il comprend un organe de sélection pour sélectionner un mode de fonctionnement autonome dans lequel le freinage automatique est activé ou un mode de fonctionnement manuel dans lequel le circuit hydraulique de freinage manuel (10) est activé.

8. Système de freinage selon les revendications 3 et 6, **caractérisé en ce que** le circuit hydraulique de freinage manuel (10) et le circuit hydraulique complémentaire (3) sont connectés aux organes de freinage (la, lb, 1 c, 1d) par l'intermédiaire d'une porte hydraulique « OU » permettant de donner la priorité au circuit hydraulique (3, 10) présentant la pression hydraulique de freinage la plus élevée.

9. Système de freinage selon l'une quelconque des revendications 1 à 8, **caractérisé en ce qu'**il comprend un module de répartition (2) de la pression hydraulique de freinage, du genre ABS et/ou ESP.

10. Véhicule comportant un système de freinage conforme à l'une quelconque des revendications 1 à 9, **caractérisé en ce qu'**il est configuré en véhicule individuel.

11. Véhicule autonome comportant un système de freinage conforme à l'une quelconque des revendications 1 à 9.

12. Convoi de véhicules reliés ensemble grâce à un attelage mécanique ou immatériel, ledit convoi comprenant un véhicule tracteur comportant un système de freinage conforme à l'une quelconque des revendications 1 à 9, et au moins un véhicule tracté équipé d'un système de freinage selon la revendication 2, l'automate de freinage (4) du véhicule tracteur étant connecté à l'automate de freinage (4) du véhicule tracté par l'intermédiaire d'une liaison de communication filaire ou non filaire, par laquelle transitent les consignes de freinage pour ledit véhicule tracté.

## Patentansprüche

1. Bremssystem eines motorisierten Straßenfahrzeugs, das für Anhänger und für Zugmaschinen konfiguriert ist, um Bremsorgane (1a, 1b, 1c, 1d) des Fahrzeugs zu betätigen, die den Rädern des Fahrzeugs zugeordnet sind, wobei das System Steuerorgane zur Steuerung seines Betriebs und einen manuellen hydraulischen Bremskreis (10) umfasst, **dadurch gekennzeichnet, dass** es einen komplementären Hydraulikkreis (3) umfasst, mit dem das gleiche Fahrzeug ausgestattet ist, und der elektrisch gesteuert wird, wobei die Steuerorgane einen elektrischen Bremsroboter (4) umfassen, um Haupt- oder Zusatzbremsvorgaben zu erzeugen, die auf den komplementären Hydraulikkreis (3) übertragen werden.

2. Bremssystem nach Anspruch 1, **dadurch gekennzeichnet, dass** es zur Ausstattung eines gezogenen Fahrzeugs gehört, dessen Konfiguration im Anhängermodus aktiviert ist, in dem der komplementäre Hydraulikkreis (3), der elektrisch über den Bremsroboter (4) gesteuert wird, aktiviert ist, wobei der Bremsroboter (4) ein Slave eines Master-Bremsroboter (4) eines anderen Fahrzeugs ist.

3. Bremssystem nach Anspruch 1 oder 2, **dadurch gekennzeichnet, dass** das Bremssystem eine Sensorik zum Messen von Werten physikalischer Parameter für den Betrieb und die Nutzung des Fahrzeugs umfasst, wobei die Sensoren mit dem Bremsroboter (4) verbunden sind, um die gemessenen Werte an diesen zu übermitteln und automatisch Bremsvorgaben für den komplementären Hydraulikkreis (3) zu erzeugen und somit eine automatischen Bremsung einzuleiten.

4. Bremssystem nach einem der Ansprüche 1 bis 3, **dadurch gekennzeichnet, dass** der ergänzende Hydraulikkreis (3) mindestens einen Speicher (21a, 21b, 23, 25, 12a, 12b) zum Speichern einer Hydraulikflüssigkeit unter einem hydraulischen Druck umfasst, der für die Durchführung von Bremsvorgängen geeignet ist.

5. Bremssystem nach einem der Ansprüche 1 bis 4, **dadurch gekennzeichnet, dass** der Bremsroboter (4) Analyse- und/oder Vergleichsorgane umfasst, um einen Ausfall oder eine Störung des manuellen hydraulischen Bremskreises zu erkennen und Bremsvorgaben zu erzeugen, die einer Notbremsung des Fahrzeugs mit Hilfe des komplementären hydraulischen Bremskreises (3) entsprechen.

6. Bremssystem nach einem der Ansprüche 1 bis 5, **dadurch gekennzeichnet, dass** der manuelle Hydraulikbremskreis ein manuelles Bremsorgan in der Art eines Bremsbetätigungspedals (10a) umfasst, das mit einem Positionssensor (10b) ausgestattet ist, der eine Information zur Verfügung stellt, die verwendet wird, um diese mit der Bremsleistung zu vergleichen, die auf die Bremsorgane (1a, 1b, 1c, 1d) übertragen wird, und dadurch die Integrität des Bremssystems zu überprüfen.

7. Bremssystem nach den Ansprüchen 3 und 6, **dadurch gekennzeichnet, dass** es ein Organ umfasst, um einen autonomen Betriebsmodus auszuwählen, bei dem die automatische Bremsung aktiviert ist, oder einen manuellen Betriebsmodus, bei dem der hydraulische Kreis für die manuelle Bremsung (10) aktiviert ist.

8. Bremssystem nach den Ansprüchen 3 und 6, **dadurch gekennzeichnet, dass** der manuelle hydraulische Bremskreis (10) und der komplementäre hydraulische Kreis (3) über ein hydraulisches "ODER"-Gatter mit den Bremsorganen (1a, 1b, 1c, 1d) verbunden sind, mit dem dem hydraulischen Kreis (3, 10) Vorrang eingeräumt werden kann, das den höchsten hydraulischen Bremsdruck aufweist.

9. Bremssystem nach einem der Ansprüche 1 bis 8, **dadurch gekennzeichnet, dass** es ein Modul (2) zur Verteilung des hydraulischen Bremsdrucks in der Art eines ABS und/oder eines ESP umfasst.

10. Fahrzeug mit einem Bremssystem nach einem der Ansprüche 1 bis 9, **dadurch gekennzeichnet, dass** es als Einzelfahrzeug konfiguriert ist.

11. Autonomes Fahrzeug mit einem Bremssystem nach einem der Ansprüche 1 bis 9.

12. Konvoi von Fahrzeugen, die durch eine mechanische oder immaterielle Kupplung miteinander verbunden sind, wobei der Konvoi ein Zugfahrzeug mit einem Bremssystem nach einem der Ansprüche 1 bis 9 und mindestens ein gezogenes Fahrzeug mit einem Bremssystem nach Anspruch 2 umfasst und der Bremsroboter (4) des Zugfahrzeugs über eine drahtgebundene oder drahtlose Kommunikationsverbindung, über welche die Bremsvorgaben für das gezogene Fahrzeug übertragen werden, mit dem Bremsroboter (4) des gezogenen Fahrzeugs verbunden ist.

## Claims

1. A braking system adapted to a road motor vehicle, configured in trailer mode or in tractor mode, for the purpose of actuating brake members (1a, 1b, 1c, 1d) for braking the vehicle that are associated with the wheels of said vehicle, said system comprising control members for controlling operation of it and a manual braking hydraulic circuit (10), said braking system being **characterised in that** it further comprises an additional hydraulic circuit (3) equipping the same vehicle and electrically controlled, the control members comprising an electrical braking automated logic controller (4) for generating main or additional braking setpoints, which are transmitted to the additional hydraulic circuit (3).

2. The braking system according to claim 1, **characterised in that** it equips a vehicle configured in trailer mode, in which the additional hydraulic circuit (3) electrically controlled via the braking automated logic controller (4) is activated, said braking automated logic controller (4) being slaved to a master braking automated logic controller (4) of another vehicle.

3. The braking system according to any one of claims 1 or 2, **characterised in that** the braking system further comprises a set of sensors for measuring values of physical parameters of operation and use of said vehicle, said sensors being connected to the braking automated logic controller (4) for the purposes of transmitting the measured values to it and of automatically generating braking setpoints for the additional hydraulic circuit (3) and of thereby implementing automatic braking.

4. The braking system according to any one of claims 1 to 3, **characterised in that** the additional hydraulic circuit (3) includes at least one accumulator (21a, 21b, 23, 25, 12a, 12b) for storing a hydraulic fluid under a hydraulic pressure suitable for implementing the braking operations.

5. The braking system according to any one of claims 1 to 4, **characterised in that** the braking automated logic controller (4) includes analysis and/or comparison members for detecting failure or malfunctioning of the manual braking hydraulic circuit and for generating braking setpoints corresponding to emergency braking of said vehicle by means of the additional braking hydraulic circuit (3).

6. The braking system according to any one of claims 1 to 5, **characterised in that** the manual braking hydraulic circuit includes a manual braking member, of the brake pedal type (10a) for actuating the braking, and equipped with a position sensor (10b), which delivers information used for making a comparison with the braking power transmitted to the brake members (1a, 1b, 1c, 1d) and for thereby checking the structural integrity of said braking system.

7. The braking system according to claims 3 and 6, **characterised in that** it further comprises a selection member for selecting an autonomous operating mode in which the automatic braking is activated or a manual operating mode in which the manual braking hydraulic circuit (10) is activated.

8. The braking system according to claims 3 and 6, **characterised in that** the manual braking hydraulic circuit (10) and the additional hydraulic circuit (3) are connected to the brake members (1a, 1b, 1c, 1d) via a hydraulic "OR" gate making it possible to give priority to the hydraulic circuit (3, 10) that has the higher braking hydraulic pressure.

9. The braking system according to any one of claims 1 to 8, **characterised in that** it further comprises a distribution module (2) for distributing the braking hydraulic pressure, the module being of the ABS type and/or of the ESP type.

10. A vehicle including a braking system according to any one of claims 1 to 9, **characterised in that** it is configured as an individual vehicle.

11. An autonomous vehicle including a braking system according to any one of claims 1 to 9.

12. A convoy of vehicles that are connected together by means of mechanical or intangible hitching-together, said convoy including a tractor vehicle including a braking system according to any one of claims 1 to 9, and at least one vehicle configured in trailer mode equipped with a braking system according to claim 2, the braking automated logic controller (4) of the vehicle configured in tractor mode being connected to the braking automated logic controller (4) of the vehicle configured in trailer mode via a wired or wireless communications link, via which the braking setpoints for said vehicle configured in trailer mode pass.
